# EUROPEAN PATENT SPECIFICATION

(11) **EP 1 093 208 B1**
(45) Date of publication and mention of the grant of the patent: **02.08.2006**
(21) Application number: 00121891.6
(22) Date of filing: 06.10.2000
(51) Int. Cl.: H02K 1/26, H02K 3/28

(54) **An armature and an assembly of armature plates for an electrical machine, in particular for a direct-current motor with a commutator**
Anker und Ankerblechzusammenbau für eine elektrische Maschine, insbesondere für einen Gleichstrommotor mit einem Kommutator
Induit et ensemble de tôles d'induit pour une machine électrique, en particulier pour un moteur à courant continu à collecteur

(30) Priority: 11.10.1999 IT TO990878
(43) Date of publication of application: 18.04.2001
(73) Proprietor: GATE S.r.l., 10123 Torino (IT)
(72) Inventor: Bononi, Elvio, (IT), 15100 Alessandria (IT)
(74) Representative: Quinterno, Giuseppe

(56) References cited:
- EP-A- 0 653 827
- DE-C- 109 941
- PATENT ABSTRACTS OF JAPAN vol. 009, no. 095 (E-310), 24 April 1985 (1985-04-24) -& JP 59 222051 A (KOKUSAN DENKI KK), 13 December 1984 (1984-12-13)

## Description

The subject of the present invention is an armature for an electrical machine, in particular for a direct-current motor with a commutator of the type defined in the introductory part of appended Claim 1. Such an armature is known from DE 109941.

An armature of this type may be, for example, the internal rotor of an electrical machine or the stator of a machine with an external rotor.

An object of the invention is to provide an armature of this type which is formed in a manner such that the axial bulk of the end or head portions of the windings of the armature coil is greatly reduced.

This and other objects are achieved, according to the invention, by an armature the main characteristics of which are defined in appended Claim 1.

A further subject of the invention is an assembly of plates usable in the armature.

Further characteristics and advantages of the invention will become clear from the following detailed description given purely by way of non-limiting example with reference to the appended drawings, in which:
Figure 1 is a front view of a rotor of an electrical machine according to the invention, shown in an intermediate stage of the formation of its coil,
Figure 2 shows the rotor of Figure 1 with the coil completed,
Figure 3 is a front view of another rotor according to the invention in an intermediate stage of the formation of its coil,
Figure 4 shows the rotor of Figure 3 with the coil completed, and
Figure 5 shows a further rotor according to the invention, complete with its coil.

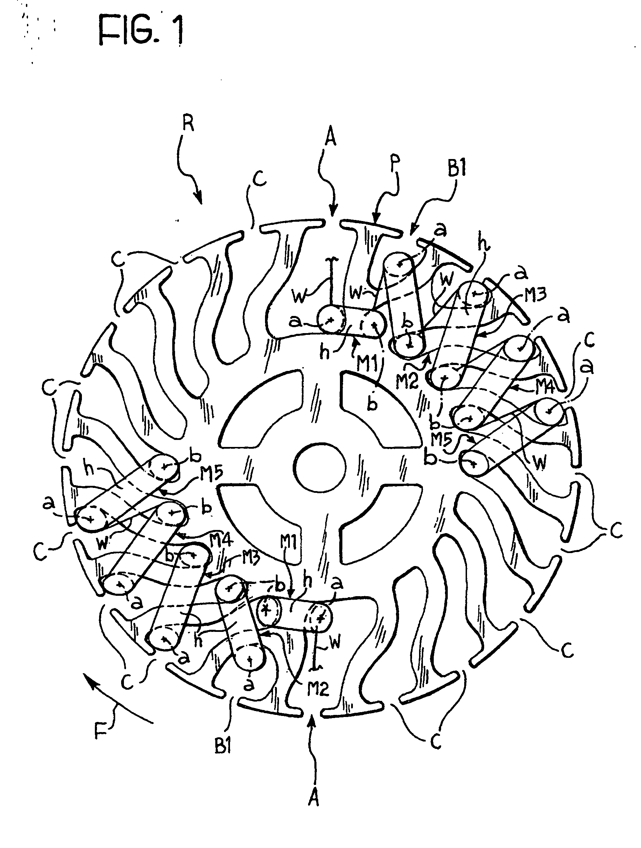

In Figure 1, a rotor for an electrical machine such as a direct-current motor with a commutator is indicated R. The rotor comprises an assembly P of plates having a substantially cylindrical general shape. Only an end plate of the assembly is visible in the drawings.

A plurality of longitudinal peripheral recesses is formed in the assembly of plates P. In the embodiment shown, these recesses comprise two diametrally opposed sets of recesses, each set having a length equal to half of the outer circumference of the assembly P.

In particular, each of the sets of recesses comprises an initial recess A succeeded by (at least) one adjacent recess B1, which in turn is succeeded by a plurality of further recesses C.

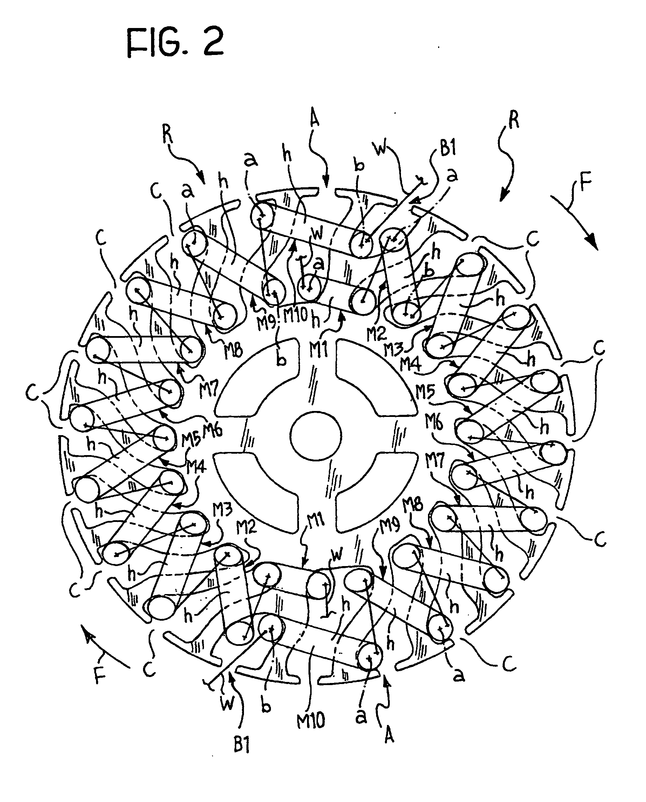

A coil constituted by a plurality of windings formed with an insulated conductor wire W is formed in the two sets of recesses of the rotor. Each of the two sets of coils corresponding to the two sets of recesses described above comprises a plurality of windings indicated M1-M10 in Figures 1 and 2.

Each of the windings M of the coil comprises two longitudinal winding portions a, b which extend in respective distinct recesses of the assembly of plates, these recesses being separated from one another by an intermediate recess, and two end or head winding portions h which extend beyond the ends of the assembly of plates. Each recess of the rotor R houses a longitudinal portion a of one winding and a longitudinal portion b of another winding.

In each set of recesses, the initial recess A, hereinafter defined as the initial coil recess, has a radially innermost portion which can house two longitudinal portions of two different windings. In particular, as can be seen in Figure 2, each initial recess A houses, in its radially innermost portion, the longitudinal portions b and a, respectively, of the windings indicated M9 and M1, respectively, therein.

Each recess B1 has a depth less than that of the corresponding initial recess A. The recesses C, however, have identical cross-sections, inclined to respective radial directions. Each of the recesses C can house a longitudinal portion a of a winding in its radially outermost portion and a longitudinal portion b of another winding in its radially innermost portion. With the assembly of plates P shown in Figure 1, the formation of the coil, and hence of the various windings, starts from each of the initial recesses A with the formation of the winding M1, and then of the winding M2, and then of the winding M3, and so on, in the direction of formation of the coil indicated by the arrows F. In particular, starting from a recess A, first of all the winding M1 is formed with the insulated conductor wire, with its longitudinal portion a extending in the radially innermost portion of the recess A and its longitudinal portion b extending in the innermost portion of the first recess C. Upon completion of the winding M1, the winding M2 is then formed with the same wire W or with another piece of wire, with its portion a extending in the recess B1 in a position radially outside of the winding M1, and its longitudinal portion b extending in the radially innermost portion of the second recess C.

Starting from the two initial recesses A, the formation of the windings continues in the manner described until the coil is completed as shown in Figure 2. As can be seen in this drawing, each winding M9 has its longitudinal portion a extending in the radially outermost portion of the respective penultimate recess C and its longitudinal portion b extending in the base portion of an initial recess A, adjacent the portion a of the first winding M1 formed.

Each final winding M10 has its longitudinal portion a extending in the radially outermost portion of the last recess C and its longitudinal portion b extending in the recess B1 radially outside of the first winding M1 formed.

As can be seen from Figure 2, upon completion of the coil, there is no overlapping between the end or head portions h of the various windings. This advantageously reduces the axial bulk of the coil.

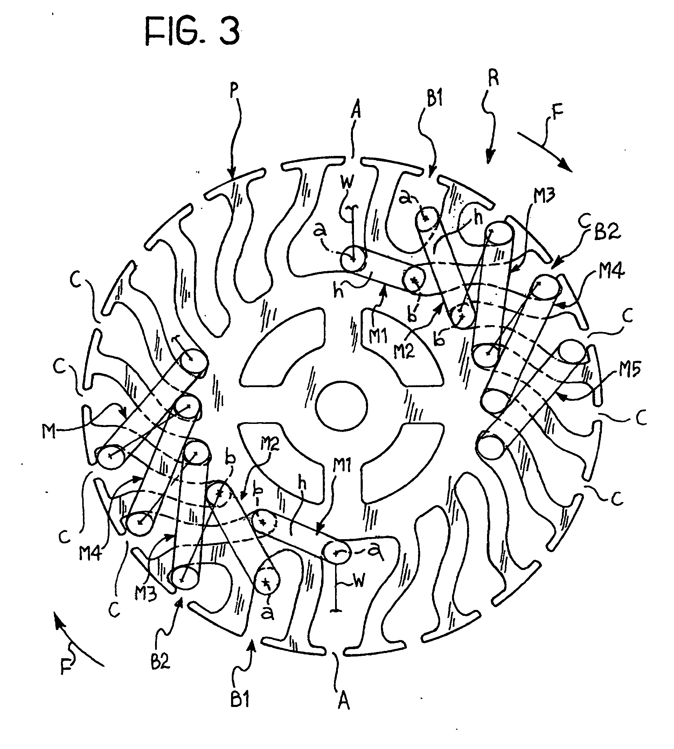

In the embodiment described above with reference to Figures 1 and 2, each winding M has its respective longitudinal portions a, b extending in respective distinct recesses of the plate assembly, these recesses being separated by an intermediate recess. However, as will be seen with reference to Figures 3 to 5, the invention can in general be extended to coils in which the longitudinal portions of each winding extend in recesses separated by N intermediate recesses, where N is greater than 0. In fact, as can easily be confirmed, if the windings have their two longitudinal portions located in immediately successive recesses (N = 0), the positioning of the windings in a manner such that there is no overlapping between their heads does not pose particular problems.

In general, therefore, with windings the longitudinal portions of which extend in distinct recesses separated by N intermediate recesses, the or each initial coil recess A must be succeeded by N adjacent recesses having respective depths which are less than that of the initial recess A and which decrease progressively in the direction F of formation of the coil. In the embodiment described with reference to Figures 1 and 2, N = 1. Further embodiments in which N = 2 and N = 3 will be described below with reference to Figures 3 to 5.

In each case, although in the examples shown in the drawings the recesses are divided into two sets each having an initial recess A, embodiments with a single set of recesses, and hence with only one initial coil recess A, also fall within the scope of the present invention. However, an embodiment with a single initial coil recess might present problems from the point of view of the balancing of the rotor. Clearly, such problems do not arise when the assembly of plates has a plurality of sets of recesses of the above-mentioned type arranged in succession at regular angular intervals around the periphery of the assembly.

Naturally, these balancing problems do not arise if the armature is intended to act as a stator in an electrical machine with an external rotor.

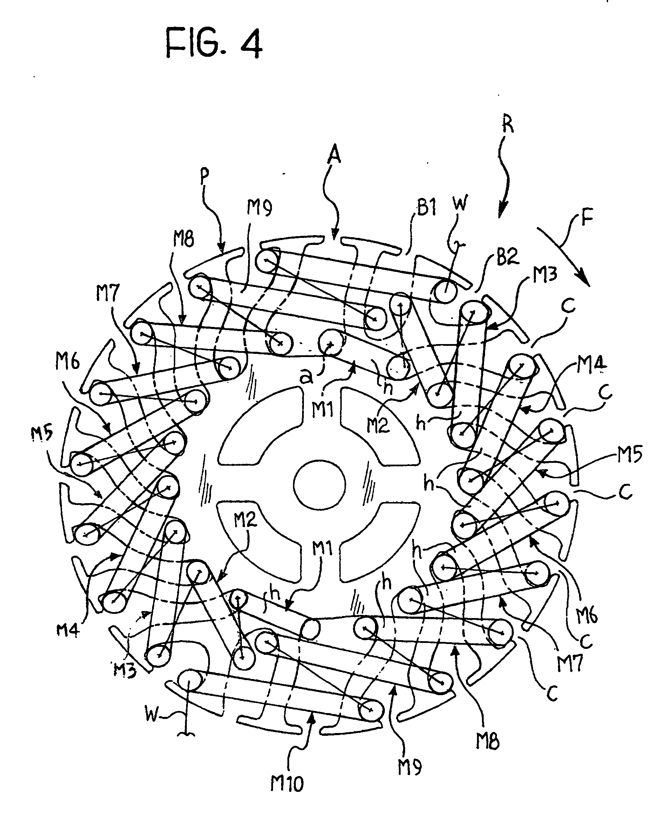

Figures 3 and 4 show a rotor R the coil of which comprises two sets of windings M1-M10. The assembly P of plates has two initial coil recesses A each succeeded by N = 2 adjacent recesses B1 and B2 having respective depths which are less than that of the initial recess A and which decrease progressively in the direction F of formation of the coil. The recesses B1 and B2 are succeeded by a plurality of successive recesses C having cross-sections inclined to respective radial directions, again in the direction F of formation of the coil.

As can be seen in Figure 4, the initial windings M1 are in the radially innermost positions and the final windings M9 and 10 extend outside of the initial windings radially.

In this embodiment also, the coil is formed without any overlapping between the end or head portions h of the various windings.

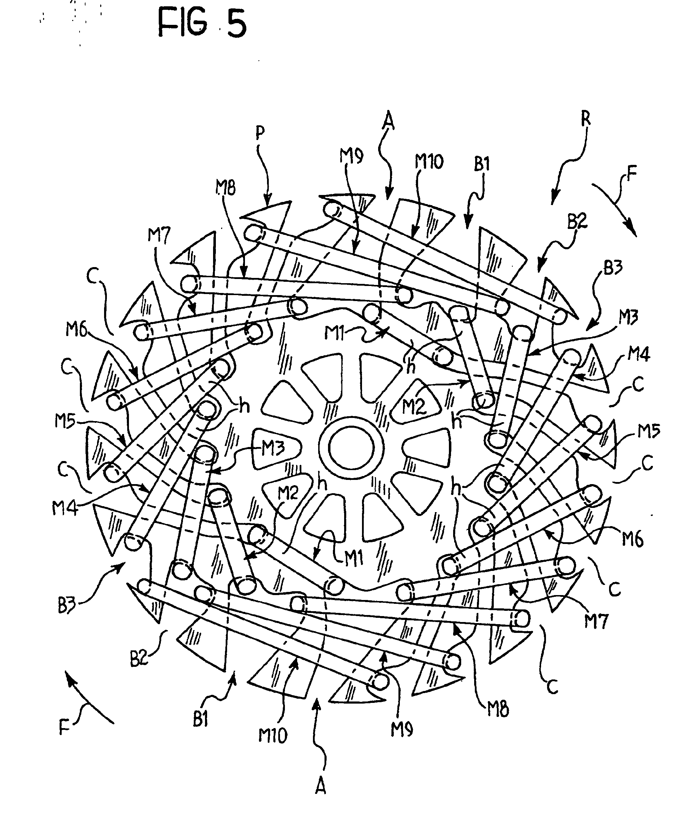

Figure 5, in which parts and elements already described have been attributed the same alphanumeric references, shows a rotor R in which the two longitudinal portions of each winding extend in respective distinct recesses separated by N = 3 intermediate recesses. After the or each initial coil recess A, the assembly P of plates has N = 3 adjacent recesses, indicated B1, B2, and B3, having respective depths which are less than that of the initial recess A and which decrease progressively in the direction F of formation of the coil. The recesses B1, B2 and B3 are succeeded by a plurality of recesses C having cross-sections inclined to respective radial directions in the direction F of formation of the coil.

Naturally, the principle of the invention remaining the same, the forms of embodiment and details of construction may be varied widely with respect to those described and illustrated purely by way of non-limiting example, without thereby departing from the scope of the invention as defined in the appended claims.

## Claims

1. An assembly of plates (P) for an armature (R) of an electrical machine, in particular for a direct-current motor with a commutator, which has a substantially cylindrical general shape and in which a plurality of longitudinal peripheral recesses (A, B, C) is formed for housing windings (M) of insulated wire (W) of a rotor coil, each of which comprises two longitudinal winding portions (a, b) to be fitted in respective distinct recesses of the assembly of plates (P) these recesses being separated by N intermediate recesses where N is greater than 0, and two end or head portions (h) which extend beyond the ends of the assembly of plates (P), each recess (A, B, C) being able to house a longitudinal portion (a) of one winding and a longitudinal portion (b) of another winding,
**characterized in that** the assembly of plates (P) has at least one set of consecutive recesses (A, B, C) including:
- at least one initial coil recess (A), the radially innermost portion of which can house two longitudinal portions (a, b) of two different windings,
- N adjacent recesses (B1, B2, B3 ...), succeeding the initial coil recess (A) in a predetermined circumferential direction (F) and having respective depths which are less than that of the initial recess (A) and which decrease progressively in the said direction (F), and
- a plurality of successive recesses (C), succeeding the N adjacent recesses (B1, B2, B3, ...) and having cross-sections inclined to respective radial directions in the said circumferential direction (F).

2. An assembly of plates according to Claim 1, **characterized in that** it has a plurality of sets of recesses (A, B, C) of the above-mentioned type, arranged in succession at regular angular intervals around the periphery of the assembly.

3. An armature (R) for an electrical machine, in particular for a direct-current motor with a commutator, comprising:
a substantially cylindrical assembly of plates (P) according to claim 1 or 2
a coil comprising a plurality of windings (M1-M10) of insulated conductor wire (W) each of which comprises two longitudinal winding portions (a, b) which extend in respective distinct recesses of the assembly of plates (P) these recesses being separated by N intermediate recesses where N is greater than 0, and two end or head portions (h) which extend beyond the ends of the assembly of plates (P),
each recess of the armature (R) housing a longitudinal portion (a) of one winding and a longitudinal portion (b) of another winding,
the arrangement being such that a first winding (M1) of the coil has one longitudinal portion (a) extending in the base of the initial coil recess (A) and its other longitudinal portion (b) extending in the base of the first of the successive recesses (C), and the N windings which spatially precede the first winding (M1) in the direction of formation (F) of the coil extend outside of the first winding (M) radially and each has a longitudinal portion (b) which extends in one of the N adjacent recesses (B1, B2, B3, ...).

## Patentansprüche

1. , Anordnung von Platten (P) für einen Anker (R) einer elektrischen Maschine, insbesondere für einen Gleichstrommotor mit einem Kommutator, welche eine im Wesentlichen zylindrische allgemeine Form aufweist und in welcher eine Mehrzahl von peripheren Längsvertiefungen (A, B, C) zum Unterbringen von Isolierdraht (W)-Wicklungen (M) einer Rotorspule gebildet ist, von denen jede zwei längsgerichtete Wicklungsabschnitte (a, b) umfasst, die jeweils in verschiedenen Vertiefungen der Anordnung von Platten (P) einzupassen sind, wobei diese Vertiefungen durch N Zwischenvertiefungen getrennt sind, wobei N größer als 0 ist, sowie zwei End- oder Kopfabschnitte (h), die sich über die Enden der Anordnung von Platten (P) hinaus erstrecken,
wobei jede Vertiefung (A, B, C) einen Längsabschnitt (a) der einen Wicklung und einen Längsabschnitt (b) einer anderen Wicklung unterbringen kann,
**dadurch gekennzeichnet, dass** die Anordnung von Platten (P) zumindest eine Gruppe von aufeinanderfolgenden Vertiefungen (A, B, C) aufweist, einschließlich:
- zumindest einer Spulen-Anfangsvertiefung (A), deren radial innerster Abschnitt zwei Längsabschnitte (a, b) zweier verschiedener Wicklungen unterbringen kann,
- N nebeneinanderliegender Vertiefungen (B1, B2, B3 ...), welche der Spulen-Anfangsvertiefung (A) in einer vorbestimmten Umfangsrichtung (F) nachfolgen und entsprechende Tiefen aufweisen, die geringer als jene der Anfangsvertiefung (A) sind und in dieser Richtung (F) fortlaufend abnehmen, und
- einer Mehrzahl von aufeinanderfolgenden Vertiefungen (C), welche den N nebeneinanderliegenden Vertiefungen (B1, B2, B3 ...) nachfolgen und Querschnitte aufweisen, die in entsprechenden radialen Richtungen geneigt sind, und zwar in dieser Umfangsrichtung (F).

2. Anordnung von Platten gemäß Anspruch 1, **dadurch gekennzeichnet, dass** sie eine Mehrzahl von Gruppen von Vertiefungen (A, B, C) des obenstehend erwähnten Typs aufweist, welche in gleichmäßigen Winkelabständen um den Umfang der Anordnung herum hintereinanderliegend angeordnet sind.

3. Anker (R) für eine elektrische Maschine, insbesondere für einen Gleichstrommotor mit einem Kommutator, umfassend:
eine im Wesentlichen zylindrische Anordnung von Platten (P) gemäß Anspruch 1 oder 2,
eine Spule mit einer Mehrzahl von Wicklungen (M1-M10) aus isoliertem Leitungsdraht (W), von denen jede zwei längsgerichtete Wicklungsabschnitte (a, b) umfasst, die sich jeweils in verschiedenen Vertiefungen der Anordnung von Platten (P) erstrecken, wobei diese Vertiefungen durch N Zwischenvertiefungen getrennt sind, wobei N größer als 0 ist, sowie zwei End- oder Kopfabschnitte (h), die sich über die Enden der Anordnung von Platten (P) hinaus erstrecken,
wobei jede Vertiefung des Ankers (R) einen Längsabschnitt (a) der einen Wicklung und einen Längsabschnitt (b) einer anderen Wicklung unterbringt,
wobei die Anordnung solcherart ist, dass sich eine erste Wicklung (M1) der Spule mit einem Längsabschnitt (a) in den Boden der Spulen-Anfangsvertiefung (A) und mit ihrem anderen Längsabschnitt (b) in den Boden der ersten der aufeinanderfolgenden Vertiefungen (C) erstreckt und sich die N Wicklungen, die der ersten Wicklung (M1) in der Bildungsrichtung (F) der Spule räumlich vorangestellt sind, außerhalb der ersten Wicklung (M) radial erstrecken und jede einen Längsabschnitt (b) aufweist, der sich in einer der N nebeneinanderliegenden Vertiefungen (B1, B2, B3 ...) erstreckt.

## Revendications

1. Ensemble de tôles (P) destiné à un induit (R) pour une machine électrique, en particulier pour un moteur à courant continu à collecteur, qui a une forme générale sensiblement cylindrique et dans lequel une pluralité de renfoncements périphériques longitudinaux (A, B, C) est formée pour loger des enroulements (M) de câble isolé (W) d'une bobine de rotor, chacun d'entre eux comprenant deux parties d'enroulement longitudinales (a, b) à fixer dans les renfoncements distincts respectifs de l'ensemble de tôles (P), ces renfoncements étant séparés par N renfoncements intermédiaires, où N est supérieur à 0, et deux parties d'extrémité ou de tête (h) qui s'étendent au-delà des extrémités de l'ensemble de tôles (P),
chaque renfoncement (A, B, C) étant capable de loger une partie longitudinale (a) d'un enroulement et une partie longitudinale (b) d'un autre enroulement,
**caractérisé en ce que** l'ensemble de tôles (P) a au moins un groupe de renfoncements consécutifs (A, B, C) incluant :
■ au moins un renfoncement de bobine initial (A), dont la partie la plus intérieure radialement peut loger deux parties longitudinales (a, b) de deux enroulements différents,
■ N renfoncements adjacents (B1, B2, B3, ...), suivant le renfoncement de bobine initial (A) dans une direction circonférentielle prédéterminée (F) et ayant des profondeurs respectives qui sont inférieures à celle du renfoncement initial (A) et qui diminuent progressivement dans ladite direction (F), et
■ une pluralité de renfoncements successifs (C), suivant les N renfoncements adjacents (B1, B2, B3, ...) et ayant des sections transversales inclinées vers des directions radiales respectives dans ladite direction circonférentielle (F).

2. Ensemble de tôles selon la revendication 1, **caractérisé en ce qu'**il possède une pluralité de groupes de renfoncements (A, B, C) du type susmentionné, agencés en succession à des intervalles angulaires réguliers autour de la périphérie de l'ensemble.

3. Induit (R) pour une machine électrique, en particulier pour un moteur à courant continu à collecteur, comprenant :
un ensemble de tôles sensiblement cylindrique (P) selon la revendication 1 ou 2 ;
une bobine comprenant une pluralité d'enroulements (M1-M10) de câble conducteur isolé (w) dont chacun comprend deux parties d'enroulement longitudinales (a, b) qui s'étendent dans les renfoncements distincts respectifs de l'ensemble de tôles (P), ces renfoncements étant séparés par N renfoncements intermédiaires où N est supérieur à 0, et deux parties d'extrémité ou de tête (h) qui s'étendent au-delà des extrémités de l'ensemble de tôles (P) ;
chaque renfoncement de l'induit (R) logeant une partie longitudinale (a) d'un enroulement et une partie longitudinale (b) d'un autre enroulement ;
l'agencement étant tel qu'un premier enroulement (M1) de la bobine a une partie longitudinale (a) s'étendant dans la base du renfoncement de bobine initial (A) et son autre partie longitudinale (b) s'étendant dans la base du premier des renfoncements successifs (C), et les N enroulements qui précèdent spatialement le premier enroulement (M1) dans la direction de formation (F) de la bobine s'étendent à l'extérieur du premier enroulement (M) radialement et chacun a une partie longitudinale (b) qui s'étend dans l'un des N renfoncements adjacents (B1, B2, B3, ...) .
